(19) Europäisches Patentamt
European Patent Office
Office européen des brevets

(11) Numéro de publication: **0 385 985 B1**

# (12) FASCICULE DE BREVET EUROPEEN

(45) Date de publication de fascicule du brevet: **27.10.93**

(51) Int. Cl.⁵: **C07C 317/36**, C08G 59/50

(21) Numéro de dépôt: **88902499.8**

(22) Date de dépôt: **04.03.88**

(86) Numéro de dépôt internationale :
**PCT/FR88/00129**

(87) Numéro de publication internationale :
**WO 88/06582 (07.09.88 88/20)**

## (54) DIAMINES AROMATIOUES A GROUPEMENTS SULFONES, LEUR PREPARATION ET LEUR APPLICATION COMME DURCISSEURS DE RESINES EPOXYDES.

(30) Priorité: **05.03.87 FR 8702982**

(43) Date de publication de la demande:
**12.09.90 Bulletin 90/37**

(45) Mention de la délivrance du brevet:
**27.10.93 Bulletin 93/43**

(84) Etats contractants désignés:
**AT BE CH DE GB IT LI LU NL SE**

(56) Documents cités:
**EP-A- 0 135 647**
**DE-A- 2 315 607**
**GB-A- 1 322 485**
**US-A- 4 377 673**
**US-A- 4 645 803**

(73) Titulaire: **SOCIETE NATIONALE ELF AOUITAINE**
**Tour Elf,**
**2, Place de la Coupole,**
**La Défense 6**
**F-92400 Courbevoie(FR)**

Titulaire: **PECHINEY**
**23, rue Balzac**
**F-75008 Paris(FR)**

(72) Inventeur: **HORNY, Patrick**
**Place du Faubourg-Saint-Germain**
**F-64190 Navarrenx(FR)**

(74) Mandataire: **Rochet, Michel et al**
**ELF ATOCHEM S.A.**
**Département Propriété Industrielle**
**4-8, Cours Michelet**
**La Défense 10 - Cedex 42**
**F-92091 Paris-La-Défense (FR)**

EP 0 385 985 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention a trait à de nouvelles diamines aromatiques qui présentent dans leurs chaînes des groupements sulfones et des groupements éthers ou thioéthers. Elle concerne également un procédé de préparation de ces diamines et se rapporte encore à leur application comme durcisseurs de résines époxydes.

La demande de brevet européen EP-A-0135647 décrit des compositions comprenant une résine époxy et un durcisseur de formule :

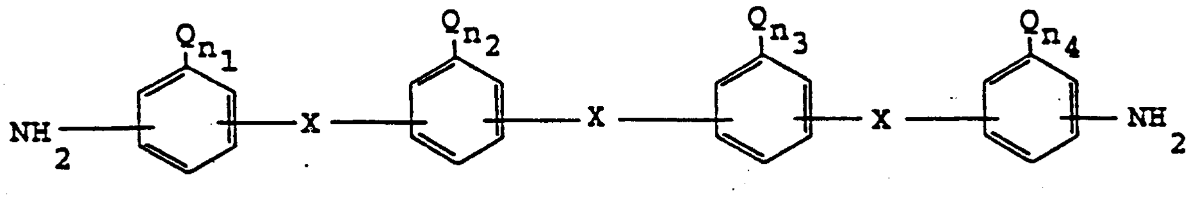

dans laquelle les X représentent indépendamment une liaison directe, O, S, $SO_2$, CO, COO, $C(CF_3)_2$, $C(R_1R_2)_2$ où $R_1$ et $R_2$ sont indépendamment de l'hydrogène ou un alkyle ayant de 1 à 4 atome(s) de carbone, Q est un alkyle ayant de 1 à 4 atome(s) de carbone, $n_1$ à $n_4$ ont indépendamment la valeur de 0 à 4, un au moins des "n" ayant la valeur 1 ou une valeur supérieure.

Le brevet US-A-4,645,803 décrit des compositions comprenant une résine époxy et un agent de durcissement aminé de formule :

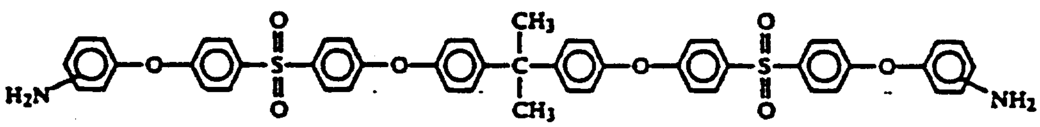

dans laquelle les deux groupements $NH_2$ sont situés en position méta ou para.

Le brevet GB-A-1322485 décrit des diamines aromatiques à groupement sulfone de formule:

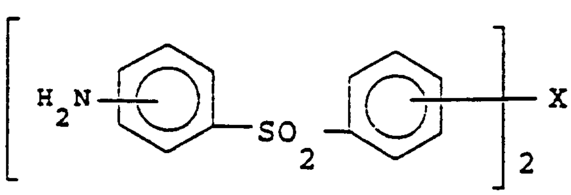

dans laquelle X est une liaison directe, $Ar_1$ ou $-Ar_1-Y-Ar_1$, -Y est $-SO_2-$, $-SO_2-Ar^2-SO_2-$, SO,-CO- ou $-CO-Ar_2-CO-$ où $Ar_1$ représente un noyau benzénique éventuellement substitué, $Ar_2$ représente un noyau benzénique, biphénylène ou naphtalène, éventuellement substitué.

Le brevet US-A-4,377,673 décrit des polyimides dérivant de diverses diamines, parmi lesquelles les diamines de formule :

$H_2N-C_6H_4-O-C_6H_4-SO_2-C_6H_4-O-C_6H_4-SO_2-C_6H_4-O-C_6H_4-NH_2$

La demande DE-A-2315607 décrit notamment des diamines de formule :

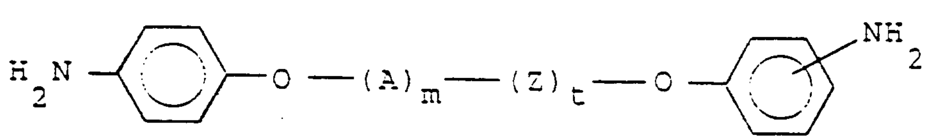

dans laquelle A représente

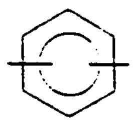
,
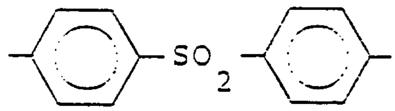

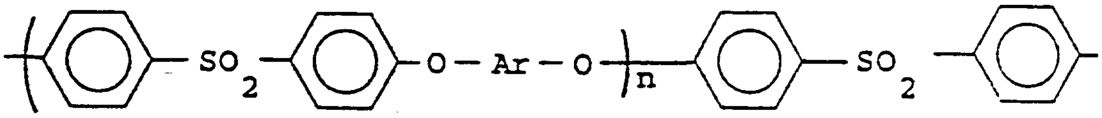
,

où
Z représente

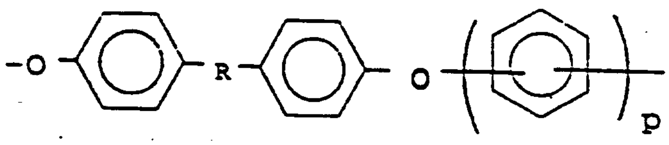

ou

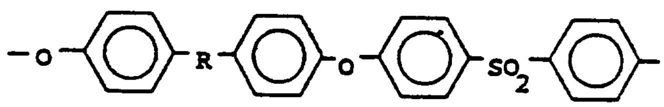

et Ar représente

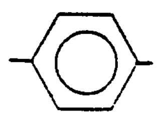

ou

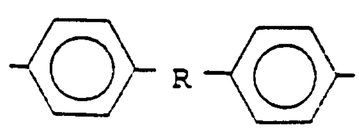

Les diamines aromatiques du type des bis (aminophényl)sulfones, par exemple la bis (amino-4 phényl) sulfone, sont utilisées couramment comme durcisseurs des résines époxydes et notamment des résines époxydes qui sont employées dans la fabrication des matériaux composites à matrices organiques et renforts fibreux, en particulier renforts constitués de fibres longues telles que fibres de verre, fibres de carbone ou encore fibres de polyamides aromatiques.

Les formulations conventionnelles à base de résines époxydes et de durcisseurs du type des diamines aromatiques telles que précités, que l'on met en oeuvre pour la production de matériaux composites à renfort fibreux et plus particulièrement à renfort de fibres longues, présentent l'inconvénient de conduire à des matériaux composites possédant une résistance au choc insuffisante pour les applications auxquelles ces matériaux composites sont destinés et notamment pour les applications dans le domaine de l'aéronautique.

L'invention propose de nouvelles diamines aromatiques à groupements sulfones et à groupements éthers ou thioéthers, qui sont, entre autres, appropriées comme durcisseurs de résines époxydes et permettent notamment de produire, à partir de formulations de résines époxydes les contenant et de renforts fibreux, des matériaux composites ayant une résistance au choc améliorée sans perte sur les autres propriétés.

Les diamines aromatiques préparées suivant l'invention répondent à la formule générale (I) :

$H_2N-R_1-SO_2-R_2-X-Z-X-R_2-SO_2-R_1-NH_2$ (I)

où :

- les symboles $R_1$ et $R_2$, identiques ou différents, désignent des radicaux divalents choisis parmi les radicaux aromatiques divalents hydrocarbonés en $C_6$ à $C_{20}$ et les radicaux qui en dérivent par remplacement d'un ou plusieurs de leur(s) atome(s) d'hydrogène par un ou plusieurs substituant(s) choisi(s) parmi les atomes d'halogène et les groupements fonctionnels monovalents;
- les X, identiques ou différents, représentent chacun un atome d'oxygène ou de soufre, et
- Z désigne un radical organique divalent en $C_1$ à $C_{20}$.

Les diamines aromatiques suivant l'invention possèdent la formule (II):

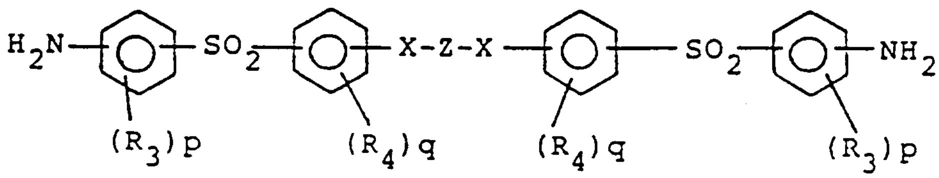
(II)

dans laquelle X et Z ont les significations précédentes, avec de préférence X représentant un atome d'oxygène, les $R_3$ et $R_4$, qui peuvent être identiques ou différents entre $R_3$, entre $R_4$ et également entre $R_3$ et $R_4$, désignent chacun un atome d'halogène ou encore un reste monovalent choisi parmi les radicaux hydrocarbonés monovalents en $C_1$ à $C_8$, et les groupements fonctionnels monovalents, et les symboles p et q représentent des nombres entiers, identiques ou différents, prenant les valeurs de 0 à 4 et plus particulièrement de 0 à 2.

Des diamines préférées de formule (II) correspondent à p et q égaux chacun à zéro et X désignant un atome d'oxygène.

En particulier, dans les formules (I) et (II), Z représente un radical divalent choisi parmi les radicaux alcoylènes en $C_1$ à $C_{12}$, les radicaux cycloalcoylènes en $C_5$ à $C_{20}$, les radicaux aromatiques divalents hydrocarbonés mononucléaires en $C_6$ à $C_{20}$, les radicaux aromatiques divalents hydrocarbonés polynucléaires en $C_{12}$ à $C_{20}$ à noyaux enchaînés, les radicaux divalents hydrocarbonés aromatiques polynucléaires en $C_{10}$ à $C_{20}$ à noyaux condensés, les radicaux aromatiques divalents de formule -Ar-Y-Ar- dans laquelle -Ar- est un radical arylique divalent en $C_6$ à $C_{10}$ et -Y- représente -S-, - SO-, $-SO_2-$, -O-, -CO-, $-C_nH_{2n}-$ avec "n" désignant un nombre entier allant de 1 à 12, et les radicaux dérivant de l'un ou l'autre des radicaux précités par remplacement d'un ou plusieurs de leur(s) atome(s) d'hydrogène par un ou plusieurs substituant(s) choisi(s) parmi les atomes d'halogène et les groupements fonctionnels monovalents, par exemple tels que ceux précités.

Avantageusement, dans les formules (I) et (II), Z désigne un radical divalent choisi parmi les suivants

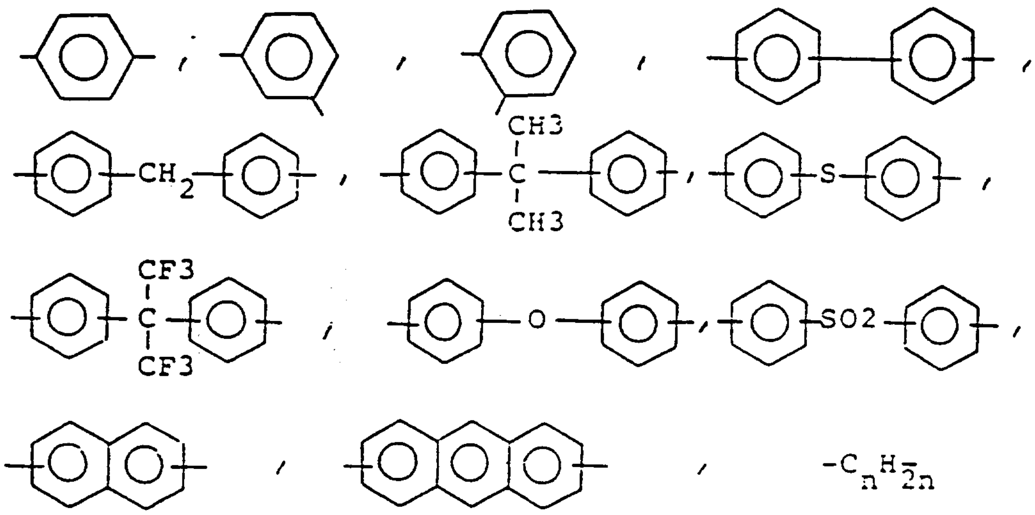

$-C_nH_{2n}$

avec "n" représentant un entier allant de 1 à 12 et de préférence de 1 à 8.

Un procédé pour la préparation des diamines suivant l'invention consiste à faire réagir un composé aminé et chloré de formule (III) $H_2N-R_1-SO_2-R_2-Cl$ sur un sel alcalin ou alcalino-terreux d'un composé de formule (IV) HX-Z-XH, les symboles R1, R2, X et Z ayant les significations ci-dessus, en opérant dans un solvant aprotique polaire notamment diméthylsulfoxyde ou diméthylacétamide avec un rapport molaire du composé aminé et chloré au composé HX-Z-XH allant de 1,7 : 1 à 2,3 : 1, et de préférence sensiblement égal à 2: 1.

Le milieu réactionnel est généralement porté à une température suffisante pour faciliter l'évolution de la réaction. De préférence, on met en oeuvre la réaction à la température de reflux du solvant.

Pour obtenir les diamines de formule (II), le composé de formule HX-Z-XH est mis en réaction avec un composé aminé et chloré répondant à la formule (V) suivante:

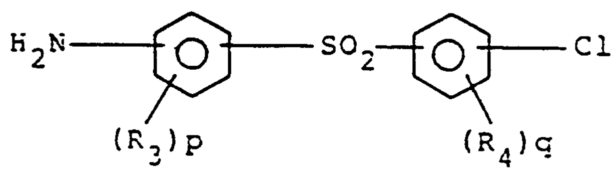

(V)

dans laquelle les $R_3$ et $R_4$, qui peuvent être identiques ou différents entre $R_3$, entre $R_4$ et également entre $R_3$ et $R_4$, désignent chacun un atome d'halogène ou un reste monovalent choisi parmi les radicaux hydrocarbonés monovalents en $C_1$ à $C_8$ et les groupements fonctionnels monovalents et les symboles p et q représentent des nombres entiers, identiques ou différents, prenant les valeurs de 0 à 4 et plus particulièrement de 0 à 2.

Le composé de formule (III) ou de formule (IV) est préparé, par exemple, par aminolyse des composés dichlorés correspondants de formule (VI) : $Cl-R_1-SO_2-R_2-Cl$ ou de formule (VII)

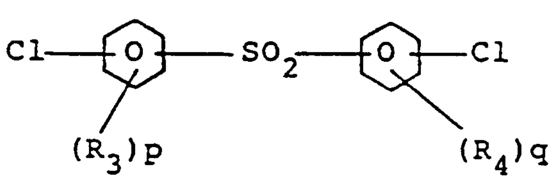

(VII)

La réaction d'aminolyse peut être effectuée de toute manière connue en soi. On peut par exemple mettre en oeuvre cette réaction comme indiqué par B. CIOCCA et L. CANONICA dans la revue "LA CHEMICA & L'INDUSTRIA" année 1944, 26 (1-2), pages 7 à 9, en faisant agir l'ammoniac sur le composé dichloré de formule (VI) ou de formule (VII) en opérant dans un solvant de l'ammoniac, par exemple eau,

alcool, éthylène glycol, en présence d'un catalyseur d'aminolyse, notamment composé de cuivre tel que sulfate de cuivre, le milieu réactionnel étant maintenu à une température d'environ 150 °C à 210 °C et sous une pression correspondant à la pression autogène dudit milieu à la température de réaction.

Comme indiqué plus haut, les diamines suivant l'invention sont efficaces, entre autres, comme durcisseurs de résines époxydes. A ce titre, on peut donc substituer ces diamines, en partie ou en totalité, aux durcisseurs conventionnels de type diamines aromatiques dans les diverses formulations à base de résines époxydes employées dans l'industrie pour la production de structures ou d'objets conformés rigides. En particulier, les diamines suivant l'invention peuvent être utilisées comme durcisseurs dans les formulations de résines époxydes à renfort fibreux et notamment à renfort de fibres longues, que l'on emploie pour la production de matériaux composites.

La résine ou les résines époxydes, qui forment la composante principale des formulations précitées susceptibles d'être durcies par les diamines suivant l'invention, peuvent être choisies parmi les diverses résines époxydes connues. Ces résines époxydes peuvent être en particulier telles que diglycidyléthers des bisphénols A ou F, époxyphénolnovolacs, époxycrésolnovolacs, tétraglycidyléthers de la méthylène dianiline ou du tétraphényloléthane, triglycidyléthers du paraaminophénol ou du triphénylolméthane, époxyhydantoines, époxycyanurates, époxycycloaliphatiques. Conviennent également les résines époxydes à groupements sulfones et notamment celles définies dans la demande de brevet français N° 86 04543 du 28.03.1986 déposées par les demanderesses.

Les formulations peuvent encore renfermer, en plus de la composante époxyde et du durcisseur, un ou plusieurs additifs consistant notamment en produits jouant le rôle de diluants réactifs, d'agents flexibilisants ou encore de monomères thermostables compatibles avec les résines époxydes.

A titre de diluants réactifs, dont l'utilisation permet de fluidifier les formulations de résines époxydes, on peut faire appel à des composés tels que diglycidyléthers d'alcanediol et notamment diglycidyléther de butanediol, diglycidyl aniline ou toluidine, polyoxypropylènes époxydés, phtalate de glycidyle.

Les agents flexibilisants, qui sont en général employés à des teneurs variant de 5 à 50 % du poids de la formulation, peuvent consister soit en oligomères flexibles fonctionnalisés tels que caoutchoucs nitriles à terminaisons acides carboxyliques ou amines, bismaléimides, bisnorbornényle imides ou biscyanates à squelette flexible, soit en polymères thermoplastiques de haute masse moléculaire compatibles avec les résines époxydes tels que polyéthersulfones, polyimides, terpolymères acrylonitrile/butadiène/styrène (terpolymères ABS).

Les monomères thermostables, dont l'addition en quantité inférieure à 30 % en poids de la formulation conduit à une amélioration de la tenue en température des résines époxydes, peuvent être notamment des composés tels que bismaléimides ou encore bismaléimides triazines.

On peut, si besoin est, faire préréagir les diamines suivant l'invention avec diverses résines époxydes et utiliser le produit de réaction ou adduct obtenu comme durcisseur modifié.

Les formulations de résines époxydes renfermant à titre de durcisseur une ou plusieurs diamines suivant l'invention sont tout particulièrement utilisables en association avec une matière fibreuse de renfort, notamment une matière de renfort à base de fibres longues, pour la fabrication de matériaux composites pour lesquels la résine époxyde constitue après durcissement la matrice dans laquelle sont noyées les fibres de renfort.

La matière fibreuse de renfort peut consister en l'une quelconque des matières fibreuses de renfort préconisées pour la fabrication des matériaux composites, ladite matière fibreuse étant généralement du type à fibres longues. Lesdites fibres consistent notamment en fibres de verre, fibres de polyamides aromatiques, fibres céramiques, fibres de carbone, fibres mixtes à base d'au moins deux de ces matériaux et mélanges ce telles fibres. Tout spécialement, la matière fibreuse de renfort à fibres longues est une matière en fibres longues de carbone ou graphite.

La matière fibreuse de renfort peut se présenter sous diverses formes et notamment sous la forme de fils, de torons, de rubans, de tissus ou même de nappes.

Pour produire le matériau composite, on associe la formulation à base de résine époxyde renfermant une ou plusieurs diamines suivant l'invention à titre de durcisseurs et la matière fibreuse de renfort en proportions telles que, dans le volume global occupé par la formulation de résine époxyde et la matière fibreuse de renfort, le volume de ladite matière fibreuse représente 20 à 80 % et de préférence 40 à 70 %.

La fabrication du matériau composite peut être réalisée en faisant appel à l'une quelconque des techniques connues permettant de produire des matériaux composites à partir de résines thermodurcissables et d'une matière fibreuse de renfort. Des matériaux composites à renfort fibres longues peuvent être produits, par exemple, par enroulement filamentaire, par moulage à l'autoclave ou à la presse de fibres préimprégnées, par pultrusion ou encore par réaction injection des formulations sur préformes de fibres sèches.

Une mise en oeuvre préférée comporte la fabrication intermédiaire de préimprégnés par dépôt de la formulation de résine époxyde, renfermant une ou plusieurs diamines à titre de durcisseur, sur la matière fibreuse, ledit dépôt étant réalisé soit à l'aide d'une solution de la formulation de résine dans un solvant volatil soit directement au moyen de la formulation de résine à l'état fondu, les préimprégnés ainsi obtenus étant utilisés dans une étape subséquente pour former le matériau composite par moulage à l'autoclave ou à la presse. Dans cette forme de mise en oeuvre, les résines époxydes préférées sont les diglycidyléthers du bisphénol A et les tétraglycidyléthers de la méthylène dianiline.

L'invention est illustrée par les exemples suivants donnés à titre non limitatif.

EXEMPLE 1

Synthèse du composé amino-4 chloro-4'diphénylsulfone

. Essai 1.1. : On opérait dans un réacteur à double enveloppe équipé pour travailler sous pression et comportant également un agitateur à ancre, une gaine thermométrique et un manomètre.

Dans le réacteur on introduisait, à température ambiante, 100 g (0,349 mode) de bis (chloro-4 phényl)sulfone, 20 g de sulfate de cuivre à titre de catalyseur, 500 g d'éthanol et 350 g d'ammoniaque à 50 % en poids de NH3. Le réacteur était alors fermé puis son contenu, maintenu sous agitation, était porté à 200 °C, la pression dans le réacteur atteignant alors 35 bars. On maintenait le milieu réactionnel dans ces conditions de pression et de température pendant 20 heures, au bout desquelles on obtenait une solution renfermant un léger précipité. Le contenu du réacteur était alors refroidi jusqu'à 50 °C, puis maintenu à cette température sous un vide de 150 Pa environ pour évaporer l'éthanol. Le milieu réactionnel exempt d'éthanol était ensuite traité à l'ébullition par une solution d'acide chlorhydrique à 20 % pour former le chlorydrate du composé résultant de l'aminolyse. La phase liquide bouillante résultant dudit traitement et renfermant le chlorhydrate en solution était isolée par filtration à chaud puis refroidie à température ambiante pour précipiter ledit chlorhydrate. Le précipité obtenu était redissous dans l'acide chlorhydrique dilué et la solution ainsi formée était neutralisée par de l'ammoniaque à 50 % pour décomposer le chlorhydrate et libérer le composé aminochloré formé par aminolyse. Ledit composé était alors séparé par filtration, puis lavé à l'eau et séché.

On obtenait 51,5 g (rendement 55 %) d'un produit gris clair consistant en amino-4 chloro-4'diphénylsulfone (en abrégé ACDS) répondant à la formule (VIII)

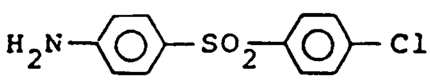

et présentant un point de fusion égal à 183 °C.

. Essai 1.2. : On opérait dans des conditions analogues à celles définies dans l'essai 1.1 avec toutefois utilisation de 250 g d'ammoniaque et maintien du milieu réactionnel à 196 °C pendant 16 heures, la pression étant égale à 34 bars.

On obtenait 25,1 g du composé ACDS, ledit composé ayant un point de fusion de 184 °C.

. Essai 1.3 : On opérait dans des conditions analogues à celles décrites dans l'essai 1.1, en utilisant toutefois un catalyseur consistant en un mélange de 20 g de sulfate de cuivre et de 5 g de tournures de cuivre et en mettant en oeuvre la réaction à 202 °C pendant 24 heures, la pression ayant une valeur de 38 bars.

On recueillait 27,3 g de composé ACDS, ledit composé présentant un point de fusion de 181 °C.

. Essai 1.4 : On opérait dans des conditions analogues à celles définies dans l'essai 1.3 avec toutefois utilisation d'un catalyseur consistant en un mélange de 13,5 g de chlorure cuivrique et de 5 g de tournures de cuivre.

On recueillait 28,8 g de composé ACDS, dont le point de fusion était égal à 183 °C.

. Essai 1.5 : On opérait dans des conditions analogues à celles données dans l'essai 1.1 avec toutefois utilisation de 200 g (0,698 mole) de bis (chloro-4phényl)sulfone et maintien du milieu réactionnel à 202 °C pendant 22 heures, la pression étant égale à 38 bars.

On recueillait 53,4 g de composé ACDS, dont le point de fusion était égal à 185 °C.

Les résultats de l'analyse élémentaire des composés ACDS obtenus dans les essais 1.1 à 1.5 montrent que ces composés ont une formule brute correspondant à celle du composé de formule (VIII) donné dans l'essai 1.1

Ces résultats sont consignés dans le tableau I ci-après :

TABLEAU I

| ANALYSE ELEMENTAIRE (% EN POIDS) | | | | | | |
|---|---|---|---|---|---|---|
| | C | H | O | N | S | Cl |
| Composé de formule (VIII) | 53,83 | 3,76 | 11,95 | 5,23 | 11,97 | 13,24 |
| Essai 1.1 | 53,24 | 3,60 | 12,26 | 4,80 | 11,42 | 13,16 |
| Essai 1.2 | 53,51 | 3,70 | 12,04 | 4,98 | 11,36 | 13,46 |
| Essai 1.3 | 53,32 | 3,66 | 12,28 | 4,65 | 11,50 | 13,12 |
| Essai 1.4 | 53,67 | 3,75 | 12,01 | 4,36 | 12,39 | 13,20 |
| Essai 1.5 | 53,62 | 3,69 | 12,07 | 5,10 | 11,80 | 13,35 |

EXEMPLE 2

Synthèse d'une diamine suivant l'invention

On opérait dans un réacteur muni d'un agitateur magnétique, d'une gaine thermométrique, d'une amenée d'azote et d'un séparateur à reflux et pouvant être utilisé sous pression réduite.

Dans le réacteur on introduisait 300 ml de diméthylsulfoxyde, 150 ml de toluène, 19,2 g (0,084 mode) de bisphénol A de formule

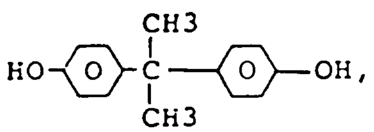

puis 15 g d'une solution aqueuse de soude à 50 % en poids de NaOH. Le contenu du réacteur était ensuite purgé à l'azote, puis chauffé à 100 °C pour éliminer l'eau par distillation azéotropique, 13,5 g d'eau étant ainsi récupérés, et enfin porté à 120 °C pendant 3 heures pour éliminer le toluène. Après refroidissement, on ajoutait au contenu du réacteur une solution de 45 g (0,168 mole) de composé ACDS dans 100 ml de diméthylsulfoxyde, puis le milieu réactionnel ainsi formé était chauffé à 160 °C pendant 7 heures. Le diméthylsulfoxyde était alors éliminé par chauffage sous vide et le résidu restant dans le réacteur était repris par 100 ml d'acétone. La solution obtenue, versée dans 2 l d'eau contenant 50 g de NaCl, donnait un précipité, qui était filtré, lavé 5 fois à l'eau et séché.

On obtenait 55 g (rendement 94 %) d'une diamine ayant un point de fusion égal à 125 °C et dont la formule brute, déterminée par analyse élémentaire, correspondait à celle du composé de formule (IX) ci-après :

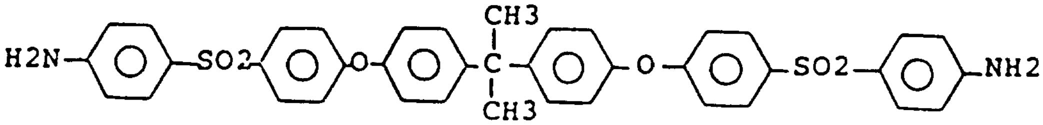 (IX)

| Résultat de l'analyse élémentaire (% en poids) | | | | | | |
|---|---|---|---|---|---|---|
| | C | H | O | N | S | Cl |
| . Théorique pour le composé de formule (IX)<br>. Trouvé | 67,81<br>65,70 | 4,96<br>5,00 | 13,90<br>14,68 | 4,06<br>3,74 | 9,28<br>9,51 | 0<br>0 |

EXEMPLE 3

Synthèse d'une diamine suivant l'invention

On opérait dans des conditions analogues à celles décrites dans l'exemple 2, en remplaçant toutefois le bisphénol A par 11 g (0,1 mode) de résorcinol et en utilisant une solution aqueuse de soude formée en dissolvant 10 g de NaOH dans 8 g d'eau. De plus la quantité d'ACDS ajoutée au contenu du réacteur, après élimination de l'eau et du toluène, représentait 53,4 g (0,2 mole).

On recueillait 48,3 g (rendement 84 %) d'une diamine ayant un point de fusion égal à 123 °C et dont la formule brute, déterminée par analyse élémentaire, correspondait à celle du composé de formule (X) ci-après :

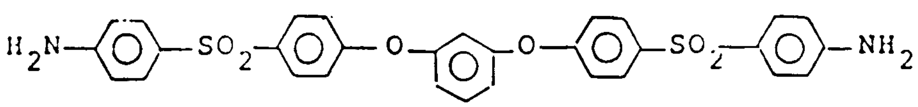

(X)

| Résultat de l'analyse élémentaire (% en poids) | | | | | | |
|---|---|---|---|---|---|---|
| | C | H | O | N | S | Cl |
| . Théorique pour le composé de formule (X)<br>. Trouvé | 62,94<br>60,96 | 4,19<br>4,27 | 16,78<br>16,04 | 4,89<br>4,68 | 11,19<br>10,78 | 0<br>0 |

EXEMPLE 4

Utilisation des diamines suivant l'invention comme durcisseurs de résines époxydes

. Essai 4.1 : Une formulation de résine époxyde était préparée en dissolvant 98 parties en poids de la diamine obtenue dans l'exemple 2 dans 100 parties en poids d'une résine époxyde liquide commercialisée sous le nom DER 332 par la société DOW et consistant en un diglycidyléther du bisphénol A.

Par cuisson de cette formulation pendant 2 heures à 120 °C puis 6 heures à 180 °C, on obtenait un produit durci, dont la température de transition vitreuse ($T_G$), déterminée par analyse enthalpique différentielle, était égale à 170 °C.

. Essai 4.2 : On préparait une formulation de résine époxyde en dissolvant 70 parties en poids de la diamine obtenue dans l'exemple 3 dans 100 parties en poids d'une résine époxyde commercialisée sous le nom LOPOX B 3302 par la société CdF CHIMIE et consistant en un tétraglycidyléther de la méthylène dianiline.

Par cuisson de cette formulation pendant 2 heures à 120 °C puis 6 heures à 180 °C, on obtenait un produit durci présentant une température de transition vitreuse égale à 200 °C.

. Essai 4.3 : On préparait une formulation de résine époxyde en mélangeant 106 parties de la diamine obtenue dans l'exemple 2 avec 100 parties en poids d'une résine époxyde commercialisée sous le nom XD 7342 par la société DOW et consistant en un triglycidyléther du tris(hydroxyphényl)méthane.

Après cuisson de cette formulation pendant 2 heures à 120 °C, puis 6 heures à 180 °C et enfin 1 heure à 250 °C, on obtenait un produit durci présentant une température de transition vitreuse égale à 240 °C.

. Essai 4.4 : On préparait une formulation de résine époxyde en dissolvant 83 parties en poids de la diamine obtenue dans l'exemple 2 dans 100 parties en poids de résine époxyde LOPOX B 3302.

On préparait également une formulation témoin de résine époxyde en dissolvant 30 parties en poids d'un durcisseur conventionnel consistant en bis(amino-4 phényl) sulfone dans 100 parties en poids de résine époxyde LOPOX B 3302.

Les quantités molaires de diamine dans chacune des formulations de l'essai 4.4 sont sensiblement égales.

Chacune desdites formulations était soumise à un schéma de cuisson identique à celui utilisé dans l'essai 4.2.

Sur les produits durcis résultant de la cuisson, on déterminait les grandeurs suivantes :

. Température de transition vitreuse ($T_G$)
. Reprise en eau (mesurée après 48 heures dans l'eau à 100 °C et exprimée en pourcentage pondéral).
. Reprise en $CH_2Cl_2$ (mesurée après 7 jours dans $CH_2Cl_2$ à température ambiante et exprimée en pourcentage pondéral)
. Temps de gel (mesuré en faisant appel à un appareil à fil de torsion connu sous le nom "SUNSHINE" Gel Time Meter)

Les résultats otbtenus sont rassemblés dans le tableau II :

TABLEAU II

| Durcisseur | Diamine de l'exemple 2 | DDS* |
|---|---|---|
| . TG (°C) | 214 | 226 |
| . Reprise en eau (48h,100 °C) | 2,6 % | 3,2 % |
| . Reprise en $CH_2Cl_2$ (7 jours, ambiante) | 2,8 % | 0,1 % |
| . Temps de gel à 150 °C | 157 mn | 86 mn |

* DDS = bis(amino-4 phényl)sulfone

En comparant les résultats obtenus dans l'essai 4.4, il apparaît que la diamine suivant l'invention, malgré une masse moléculaire nettement plus élevée que celle de la DDS, conduit à une résine durcie dont la $T_G$ est seulement inférieure d'environ 10 °C à la $T_G$ de la résine durcie par la DDS.

En outre, par rapport à la résine durcie témoin, la résine durcie par la diamine suivant l'invention a une reprise en eau plus faible (environ 20 %). De plus le temps de gel de la formulation renfermant la diamine suivant l'invention est substantiellement augmenté, ce qui est un avantage pour les applications, par exemple fabrication des préimprégnés, nécessitant une latence importante. Enfin, bien que l'absorption de $CH_2Cl_2$ soit plus élevée pour la résine durcie suivant l'invention que pour la résine durcie témoin, cette absorption reste cependant dans des limites acceptables pour ne pas constituer une gêne.

## EXEMPLE 5

### Fabrication de composite tissu de carbone/résine époxyde

On préparait des plaques composites à base de tissu de carbone et de formulations de résine époxyde contenant, à titre de durcisseur, soit une diamine suivant l'invention soit une diamine conventionnelle, à savoir la DDS, en fabriquant tout d'abord des préimprégnés puis en utilisant les préimprégnés obtenus pour produire les plaques composites et l'on déterminait ensuite les principales caractéristiques mécaniques desdites plaques.

Le tissu de carbone utilisé comme renfort consistait en un tissu de carbone existant dans le commerce sous l'appellation STEVENS GENIN SG 43 377.

Les formulations de résines époxydes employées pour la production des plaques étaient les suivantes :

. Essai 5.1 : formulation suivant l'invention obtenue en dissolvant 83 parties en poids de la diamine obtenue dans l'exemple 2 dans 100 parties en poids de résine époxyde LOPOX B 3302.
. Essai 5.2 : formulation témoin obtenue en dissolvant 30 parties en poids de DDS dans 100 parties de résine époxyde LOPOX B 3302.

### Fabrication des préimprégnés :

On préparait une solution de la formulation de résine époxyde choisie dans la méthyléthylcétone, à température ambiante, à raison de 100 g de formulation pour 100 g de solvant.

On imprégnait des pièces de 30 x 40 cm du tissu de carbone à l'aide de la solution ainsi obtenue en les immergeant dans ladite solution. Les pièces de tissu de carbone ainsi imprégnées, dites préimprégnés, étaient ensuite séchées pendant 20 à 30 minutes dans un tunnel à air chaud réglé à une température de 60-100 °C, puis mises sous vide afin d'éliminer la majeure partie du solvant utilisé et enfin stockées à -20 °C.

Fabrication des plaques composites :

Les plaques composites étaient produites par la technique du moulage au sec à l'autoclave. Pour ce faire 7 pièces préimprégnées étaient empilées sur un plateau métallique, puis recouvertes de tissus d'environnement tels que tissus de délaminage et feutres de drainage et enrobées d'une vessie dans laquelle on peut faire le vide de manière à plaquer les préimprégnés sur le platau. L'ensemble était alors placé dans un autoclave pour réaliser la cuisson en utilisant le schéma de cuisson donné ci-après :

Schéma de cuisson :

. montée de 25 °C à 135 °C à raison de 2 °C/minute
. palier de 60 minutes à 135 °C
. montée de 135 °C à 180 °C à raison de 2 °C/minute
. palier de 2 h à 180 °C
. redescente à température ordinaire à raison de 1 °C/minute
. maintien du contenu de l'autoclave sous une pression de 6 bars après 120 minutes de cuisson et jusqu'à la fin de l'opération de manière à rendre compacte la plaque composite.

On obtenait des plaques composites carbone/résine époxyde dont l'épaisseur moyenne était égale à 1,85 mm et le taux volumique de fibres représentait 62 % dans l'essai 5.1 et 64 % dans l'essai 5.2.

On préparait également des plaques composites d'épaisseur correspondante à partir du préimprégné commercial CIBA 914, dont on effectuait la cuisson selon les préconisations du fabricant.

Caractéristiques mécaniques déterminées sur les plaques composites

A) Caractéristiques de flexion :

Représentées par le module de flexion et la résistance à la flexion qui sont déterminés suivant la norme européenne EN 25/62.

B) Cisaillement interlaminaire :

Représenté par la résistance au cisaillement déterminée suivant la norme européenne EN 25/63.

C) Caractéristiques de résistance au choc :

Représentées par la force d'arrêt maximale au moment du choc et par l'énergie totale absorbée au cours du choc, qui sont déterminées par un essai de choc selon la méthode dite des poids tombants en faisant appel à l'appareil de marque CEAST. Plus grandes seront ces valeurs, meilleure sera la résistance au choc.

L'appareil précité comporte un percuteur à tête hémisphérique coulissant sur deux guides verticaux et muni d'un capteur de force monté sur le dessus du percuteur, ledit percuteur tombant en chute libre depuis une certaine hauteur sur une éprouvette (carré de 5 cm de côté) du matériau à étudier, qui est maintenue en place dans une lumière circulaire aménagée à la base des deux guides

Lors d'un choc, une partie de l'énergie cinétique du percuteur est transmise à l'éprouvette et le capteur enregistre la force et l'énergie développée en fonction du temps. Un calculateur intégré à l'appareil permet de restituer sur papier les données enregistrées durant la fraction de seconde du choc.

Les conditions d'utilisation de l'appareil sont les suivantes :

| | |
|---|---|
| . Masse du percuteur | 5,14 kg |
| . Diametre du percuteur | 12,7 mm |
| . Hauteur de chute | 1,5 m |
| . Vitesse au début de l'impact | 5,4 m/s |
| . Energie disponible | 75 Joules |

Les valeurs données comme mesures de la force d'arrêt maximale au moment du choc et de l'énergie totale absorbée sont des moyennes sur cinq échantillons.

D) Caractéristique de tenacité :

Représentée par une grandeur $G_{Ic}$ appelée résistance à la fracture (en anglais "fracture thoughness") qui est déterminée par la méthode de la double poutre encastrée (en anglais "double cantilever beam"). Cette grandeur, susceptible de caractériser l'aptitude de la matrice du matériau composite à supporter les chocs, est d'autant plus élevée que ladite matrice est tenace.

La méthode d'essai consiste à propager une fissure dans l'épaisseur d'une éprouvette du matériau composite par délamination dudit matériau composite en mode I à partir d'une préfissure réalisée à mi-épaisseur de l'éprouvette. Ladite délamination est provoquée en écartant l'une des extrémités de la fissure de son autre extrémité maintenue fixe par action d'une force de traction. A chaque instant on enregistre trois grandeurs, à savoir déplacement de traverse (1), force (F) et longueur de fissure (a).

La grandeur $G_{Ic}$ est donnée par la relation ci-après :

$$G_{Ic} = \frac{F^2}{2b} x \frac{dc}{da}$$

dans laquelle b est la largeur de l'éprouvette, $C = \frac{1}{F}$ est la compliance et 1, F et a sont les grandeurs précitées.

Chaque éprouvette permet une dizaine de mesures et une moyenne représente la valeur de $G_{Ic}$ de l'échantillon. La valeur de $G_{Ic}$ est représentative de l'énergie qu'il faut déployer pour faire apparaître dans l'épaisseur du matériau composite une fissure de surface unitaire.

Les valeurs des caractéristiques mécaniques déterminées sur les plaques composites sont rassemblées dans le tableau III

TABLEAU III

| Origine des plaques composites | Essai 5.1 (Invention) | Essai 5.2 (Témoin) | CIBA 914 (Témoin) |
|---|---|---|---|
| Taux volumique de fibres dans les plaques (%) | 62 | 64 | 60 |
| Caractéristiques de flexion | | | |
| . Résistance en flexion (Mpa) | 824 | 623 | 755 |
| . Module de flexion (GPa) | 53 | 48 | 52 |
| Cisaillement interlaminaire | | | |
| . Résistance au cisaillement (Mpa) | 67 | 60 | 58 |
| Résistance au choc | | | |
| . Force d'arrêt maximale (daN) | 195 | 164 | 190 |
| . Energie totale absorbée (J) | 9,8 | 7,2 | 9,8 |
| Tenacité | | | |
| . $G_{Ic}$ (J/m²) | 670 | | 560 |

La comparaison des résultats figurant au tableau III montre que le remplacement du durcisseur conventionnel DDS (essai 5.2) par un durcisseur suivant l'invention (essai 5.1) améliore sensiblement les caractéristiques mécaniques des matériaux composites à matrice résine époxyde et à renfort de fibres de carbone. Ainsi on peut noter des améliorations d'environ 10 % sur la résistance au cisaillement et d'environ 30 % sur la résistance à la flexion. On constate également que le matériau composite de l'essai 5.1 possède des résistances au cisaillement et en flexion supérieures d'environ 10 % à celles du matériau composite obtenu à partir des préimpregnés commerciaux CIBA 914.

L'amélioration la plus intéressante, résultant de l'utilisation de durcisseurs suivant l'invention à la place des durcisseurs conventionnels du type des diamines, est apportée dans le comportement au choc des matériaux composites. Ainsi pour le matériau composite de l'essai 5.1 on note une augmentation d'environ 30 % sur l'énergie totale absorbée et d'environ 20 % sur la force d'arrêt maximale par rapport aux valeurs correspondantes pour le matériau composite de l'essai témoin 5.2. Le matériau composite de l'essai 5.1 se retrouve donc, pour le comportement au choc, au niveau du matériau composite obtenu à partir des préimprégnés CIBA 914, dont la résine époxyde d'imprégnation est formulée avec un additif thermoplastique et peut donc être considérée comme une résine flexibilisée. L'utilisation des diamines suivant l'invention comme durcisseurs dans les formulations à base de résine époxyde permet donc sans adjonction d'additif thermoplastique d'atteindre les propriétés des formulations flexibilisées par incorporation d'additif.

Il apparaît également que la résistance à la fissuration du matériau composite de l'essai 5.1 est substantiellement améliorée par rapport à celle du matériau composite issu des préimprégnés CIBA 914, comme l'indique l'augmentation d'environ 20 % ce la grandeur $G_{Ic}$.

## Revendications

1. Procédé pour la préparation de diamines aromatiques présentant simultanément dans leurs chaînes des groupements sulfones et des groupements éthers ou thioéthers et répondant à la formule générale

   $H_2N-R_1-SO_2-R_2-X-Z-X-R_2-SO_2-R_1-NH_2$ (I)
   dans laquelle les symboles $R_1$ et $R_2$, identiques ou différents, désignent des radicaux divalents choisis parmi les radicaux aromatiques divalents hydrocarbonés en $C_6$ à $C_{20}$ et les radicaux qui en dérivent par remplacement d'un ou plusieurs de leurs atomes d'hydrogène par un ou plusieurs substituants choisis parmi les atomes d'halogène et les groupements fonctionnels monovalents, les X, identiques ou différents, représentent chacun un atome d'oxygène ou de soufre, et Z désigne un radical organique divalent en $C_1$ à $C_{20}$, caractérisé en ce que l'on fait réagir un composé aminé et chloré de formule $H_2N-R_1-SO_2-R_2-Cl$ (III) sur un sel alcalin ou alcalino-terreux d'un composé de formule HX-Z-XH (IV), les symboles $R_1$, $R_2$, X et Z ayant les significations ci-dessus, en opérant dans un solvant aprotique polaire avec un rapport molaire du composé aminé et chloré au composé HX-Z-XH allant de 1,7:1 à 2,3:1.

2. Procédé suivant la revendication 1, caractérisé en ce que le composé aminé et chloré répond à la formule

   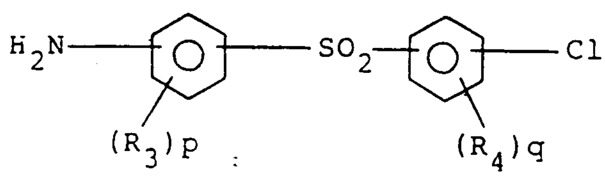 (V)

   dans laquelle les $R_3$ et $R_4$, qui peuvent être identiques ou différents entre $R_3$, entre $R_4$ et également entre $R_3$ et $R_4$, désignent chacun un atome d'halogène ou un reste monovalent choisi parmi les radicaux hydrocarbonés monovalents en $C_1$ à $C_8$ et les groupements fonctionnels monovalents et les symboles p et q représentent des nombres entiers, identiques ou différents, prenant les valeurs de 0 à 4 et plus particulièrement de 0 à 2.

3. Procédé suivant la revendication 1 ou 2, caractérisé en ce que dans la formule du composé HX-Z-XH, Z représente un radical divalent choisi parmi les radicaux alcoylènes en $C_1$ à $C_{12}$, les radicaux cycloalcoylènes en $C_5$ à $C_{20}$, les radicaux aromatiques divalents hydrocarbonés mononucléaires en $C_6$ à $C_{20}$, les radicaux aromatiques divalents hydrocarbonés polynucléaires en $C_{12}$ à $C_{20}$ à noyaux enchaînés ou en $C_{10}$ à $C_{20}$ à noyaux condensés, les radicaux aromatiques divalents de formule -Ar-Y-Ar- dans laquelle -Ar- est un radical arylique divalent en $C_6$ à $C_{10}$ et -Y- représente -S-, -SO-, $-SO_2-$, -O-, -CO-, $-C_nH_{2n}-$ avec n désignant un nombre entier allant de 1 à 12, et les radicaux dérivant de l'un ou l'autre des radicaux précités par remplacement d'un ou plusieurs de leurs atomes d'hydrogène par un ou plusieurs substituants choisis parmi les atomes d'halogène et les groupements fonctionnels monovalents.

4. Procédé suivant la revendication 3, caractérisé en ce que Z représente un radical divalent choisi parmi les suivants :

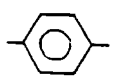 , 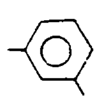 , 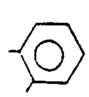 , 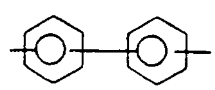 , 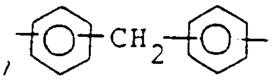 ,

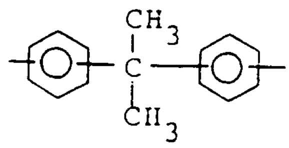 , 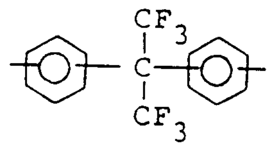 , 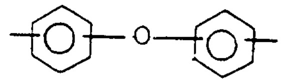 ,

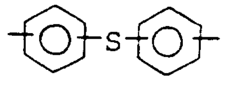 , 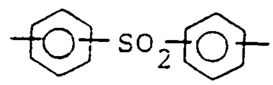 , 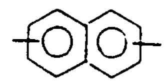 ,

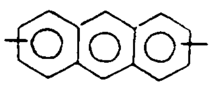 ,

$-C_nH_{2n}-$ avec n désignant un entier allant de 1 à 12 et de préférence de 1 à 8.

5. Procédé suivant l'une des revendications 1 à 4, caractérisé en ce que la réaction entre le composé aminé et chloré et le composé HX-Z-XH est mise en oeuvre à la température de reflux du solvant aprotique polaire.

6. Diamines aromatiques présentant simultanément dans leurs chaînes des groupements sulfones et des groupements éthers ou thioéthers, caractérisées en ce qu'elles répondent à la formule générale

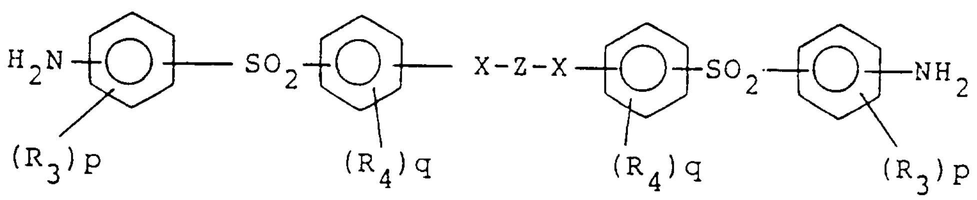 (II)

dans laquelle les $R_3$ et $R_4$, qui peuvent être identiques ou différents entre $R_3$, entre $R_4$ et également entre $R_3$ et $R_4$, désignent chacun un atome d'halogène ou un reste monovalent choisi parmi les radicaux hydrocarbonés monovalents en $C_1$ à $C_8$ et les groupements fonctionnels monovalents et les symboles p et q représentent des nombres entiers, identiques ou différents, prenant les valeurs de 0 à 4 et plus particulièrement de 0 à 2, les X identiques ou differents représentent chacun un atome d'oxygène ou de soufre et Z désigne un radical organique divalent en $C_1$ à $C_{20}$.

7. Diamines suivant la revendication 6, caractérisées en ce que, dans la formule qui les définit, X désigne un atome d'oxygène et p et q sont égaux chacun à zéro.

8. Diamines suivant la revendication 6 ou 7, caractérisées en ce que Z représente un radical divalent choisi parmi les radicaux alcoylènes en $C_1$ à $C_{12}$, les radicaux cycloalcoylènes en $C_5$ à $C_{20}$, les radicaux aromatiques divalents hydrocarbonés mononucléaires en $C_6$ à $C_{20}$, les radicaux aromatiques divalents hydrocarbonés polynucléaires en $C_{12}$ à $C_{20}$ à noyaux enchaînés ou en $C_{10}$ à $C_{20}$ à noyaux condensés, les radicaux aromatiques divalents de formule -Ar-Y-Ar- dans laquelle -Ar- est un radical arylique divalent en $C_6$ à $C_{10}$ et -Y-représente -S-, -SO-, $-SO_2-$, -O-, -CO-, $-C_nH_{2n}-$ avec n désignant un nombre entier allant de 1 à 12, et les radicaux dérivant de l'un ou l'autre des radicaux précités par remplacement d'un ou plusieurs de leurs atomes d'hydrogène par un ou plusieurs substituants choisis parmi les atomes d'halogène et les groupements fonctionnels monovalents.

9. Diamines suivant la revendication 8, caractérisées en ce que Z représente un radical divalent choisi parmi les suivants :

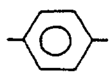 , 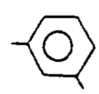 , 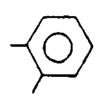 , 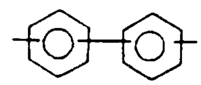 , 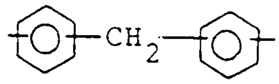 ,

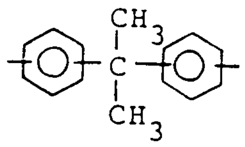 , 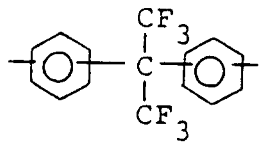 , 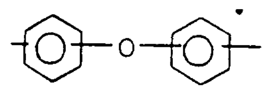 ,

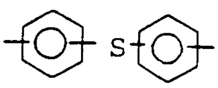 , 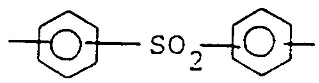 , 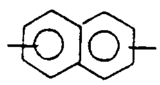 ;

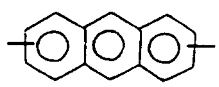 ,

$-C_nH_{2n}-$ avec n désignant un entier allant de 1 à 12 et de préférence de 1 à 8.

**10.** Application des diamines suivant l'une des revendications 6 à 9 comme durcisseurs dans les formulations à base de résine époxyde.

**11.** Application suivant la revendication 10, caractérisée en ce que les formulations à durcir à base de résine époxyde sont renforcées par une matière fibreuse et notamment par une matière formée de fibres longues, le durcissement de ces formulations renforcées conduisant à des matériaux composites.

**12.** Application suivant la revendication 10, caractérisée en ce que les formulations à durcir à base de résine époxyde sont déposées sur une matière fibreuse de renfort et notamment sur une matière formée de fibres longues pour constituer un préimprégné, dont le durcissement conduit à un matériau composite.

**13.** Application suivant la revendication 11 ou 12, caractérisée en ce que les fibres constituant la matière de renfort sont choisies parmi les fibres de verre, les fibres céramiques, les fibres de polyamides aromatiques, les fibres de carbone ou de graphite, les fibres mixtes à base d'au moins deux de ces matières et les mélanges de telles fibres.

**Claims**

**1.** Process for the preparation of aromatic diamines which simultaneously possess, in their chains, sulphone groups and ether or thioether groups, and which correspond to the general formula

$H_2N-R_1-SO_2-R_2-X-Z-X-R_2-SO_2-R_1-NH_2$ (I)

in which the symbols $R_1$ and $R_2$, which are identical or different, denote divalent radicals chosen from among $C_6$ to $C_{20}$ divalent aromatic hydrocarbon radicals and the radicals derived therefrom by replacing one or more of their hydrogen atoms by one or more substituents chosen from among halogen atoms and monovalent functional groups, the Xs, which are identical or different, each represent an oxygen atom or sulphur atom, and Z denotes a $C_1$ to $C_{20}$ divalent organic radical, characterised in that a chlorine-containing amine compound of formula $H_2-N-R_1-SO_2-R_2-Cl$ (III) is reacted with an alkali metal salt or alkaline earth metal salt of a compound of formula HX-Z-XH (IV), the symbols $R_1$, $R_2$, X and Z having the above meanings, the process being carried out in a polar aprotic solvent with a molar ratio of the chlorine-containing amino compound to the compound HX-Z-XH ranging from 1.7:1 to 2.3:1.

**2.** Process according to Claim 1, characterised in that the chlorine-containing amine compound corresponds to the formula

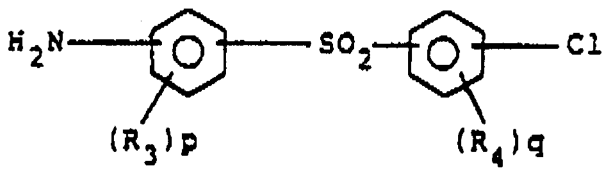

(V)

in which the $R_3$s and $R_4$s, which may be identical or different in respect of the various $R_3$s, in respect of the various $R_4$s and also in respect of $R_3$ and $R_4$, each denote a halogen atom or a monovalent radical chosen from among the $C_1$ to $C_8$ monovalent hydrocarbon radicals and the monovalent functional groups and the symbols p and q represent identical or different integers which assume values from 0 to 4 and more particularly from 0 to 2.

**3.** Process according to Claim 1 or 2, characterised in that in the formula of the compound HX-Z-XH, Z represents a divalent radical chosen from among the $C_1$ to $C_{12}$ alkylene radicals, the $C_3$ to $C_{20}$ cycloalkylene radicals, the $C_6$ to $C_{20}$ mononuclear divalent aromatic hydrocarbon radicals, the $C_{12}$ to $C_{20}$ polynuclear divalent aromatic hydrocarbon radicals with the rings linked or the $C_{10}$ to $C_{20}$ polynuclear divalent aromatic hydrocarbon radicals with the rings fused, the divalent aromatic radicals of formula -Ar-Y-Ar- in which -Ar- is a $C_4$ to $C_{10}$ divalent aryl radical and -Y- represents -S-, -SO-, $-SO_2-$, -O-, -CO- or $-C_nH_{2n}-$, with n denoting an integer ranging from 1 to 12, and the radicals derived from one or other of the abovementioned radicals by replacing one or more of their hydrogen atoms by one or more substituents chosen from among halogen atoms and monovalent functional groups.

**4.** Process according to Claim 3, characterised in that Z represents a divalent radical chosen from among the following:

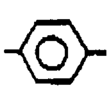 , 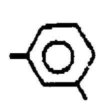 , 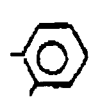 , 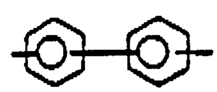 , 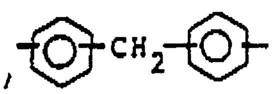 ,

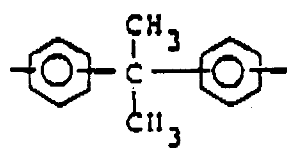 , 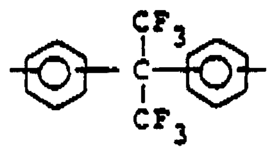 , 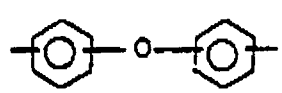 ,

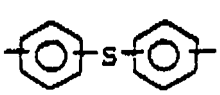 , 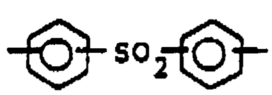 , 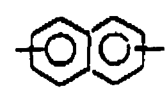 ,

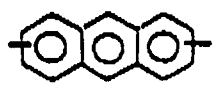 ,

and $-C_nH_{n2}-$, with n denoting an integer ranging from 1 to 12 and preferably from 1 to 8.

**5.** Process according to one of Claims 1 to 4, characterised in that the reaction between the chlorine-containing amine compound and the compound HX-Z-XH is carried out at the reflux temperature of the polar aprotic solvent.

**6.** Aromatic diamines which simultaneously possess sulphone groups and ether or thioether groups in their chains, characterised in that they correspond to the general formula

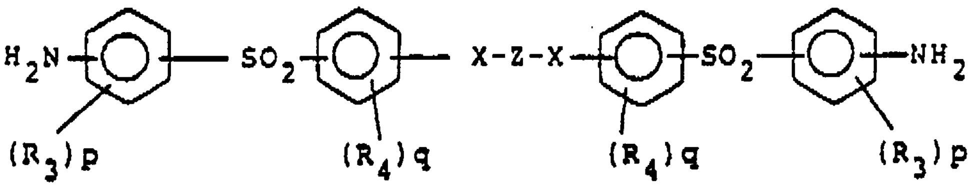 (II)

in which the $R_1$s and $R_4$s, which may be identical or different in respect of the various $R_3$s, in respect of the various $R_4$s and also in respect of $R_3$ and $R_4$, each denote a halogen atom or a monovalent radical chosen from among the $C_1$ to $C_8$ monovalent hydrocarbon radicals and the monovalent functional groups and the symbols p and q represent identical or different integers which assume values from 0 to 4 and more particularly from 0 to 2, the Xs, which are identical or different, each represent an oxygen atom or sulphur atom and Z denotes a $C_1$ to $C_{20}$ divalent organic radical.

**7.** Diamines according to claim 6, characterised in that, in the formula which defines them, X denotes an oxygen atom and p and q are each equal to zero.

**8.** Diamines according to Claim 6 or 7, characterised in that Z represents a divalent radical chosen from among $C_1$ to $C_{12}$ alkylene radicals, the $C_5$ to $C_{20}$ cycloalkylene radicals, the $C_6$ to $C_{20}$ mononuclear divalent aromatic hydrocarbon radicals, the $C_{12}$ to $C_{20}$ polynuclear divalent aromatic hydrocarbon radicals with the rings linked or the $C_{10}$ to $C_{20}$ polynuclear divalent aromatic hydrocarbon radicals with the rings fused, the divalent aromatic radicals of formula -Ar-Y-Ar- in which -Ar- is a $C_6$ to $C_{10}$ divalent aryl radical and -Y- represents -S-, -SO-, -$SO_2$-, -O-, -CO- or -$C_nH_{2n}$-, with n denoting an integer ranging from 1 to 12, and the radicals derived from one or other of the abovementioned radicals by replacing one or more of their hydrogen atoms by one or more substituents chosen from among halogen atoms and monovalent functional groups.

**9.** Diamines according to Claim 8, characterised in that Z represents a divalent radical chosen from among the following:

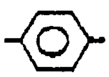, 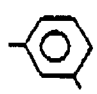, 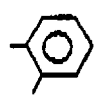, 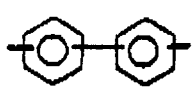, 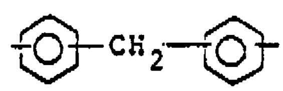,

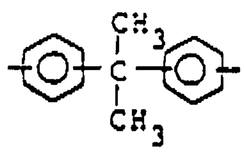, 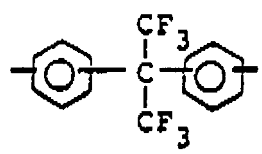, 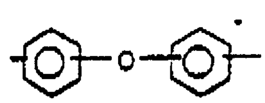,

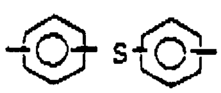, 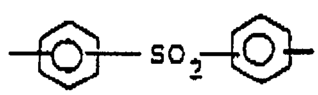, 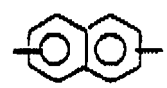,

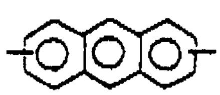,

and -$C_nH_{2n}$-, with n denoting on integer ranging from 1 to 12 and preferably from 1 to 8.

**10.** Application of the diamines according to one of Claims 6 to 9 as hardeners in formulations based on on epoxide resin.

**11.** Application according to Claim 10, characterised in that the formulations which are to be hardened and which are based on an epoxide resin are reinforced with a fibrous material and in particular with a material consisting of long fibres, the hardening of these reinforced formulations leading to composite materials.

12. Application according to Claim 10, characterised in that the formulations which are to be hardened and which are based on an epoxide resin are deposited on a fibrous reinforcing material and especially on a material consisting of long fibres so as to form a prepreg, the hardening of which leads to a composite material.

13. Application according to Claim 11 or 12, characterised in that the fibres constituting the reinforcing material are chosen from among glass fibres, ceramic fibres, aromatic polyamide fibres, carbon or graphite fibres, mixed fibres based on at least two of these materials, and mixtures of such fibres.

## Patentansprüche

1. Verfahren zur Herstellung von aromatischen Diaminen, die sowohl Sulfon- als auch Ether- oder Thioethergruppen in ihren Kohlenstoffketten haben und der allgemeinen Formel

$H_2N\text{-}R_1\text{-}SO_2\text{-}R_2\text{-}X\text{-}Z\text{-}X\text{-}R_2\text{-}SO_2\text{-}R_1\text{-}NH_2$ (I)

entsprechen, in der
die Symbole $R_1$ und $R_2$ gleiche oder verschiedene zweiwertige Substituenten bezeichnen, ausgewählt unter den zweiwertigen alkylaromatischen $C_6$- bis $C_{20}$-Substituenten und den Substituenten, die daraus durch Ersetzen von einem oder mehreren ihrer Wasserstoffatome durch einen oder mehrere Substituenten entstehen, die unter Halogenatomen und einwertigen funktionellen Gruppen ausgewählt sind,
X, gleich oder verschieden, jeweils ein Sauerstoff- oder ein Schwefelatom bedeutet, und
Z eine zweiwertige organische $C_1$- bis $C_{20}$-Gruppe bezeichnet, dadurch gekennzeichnet, daß man eine Verbindung mit Amin- und Chlorfunktionen der Formel $H_2N\text{-}R_1\text{-}SO_2\text{-}R_2\text{-}Cl$ (III) mit einem Alkali- oder Erdalkalisalz einer Verbindung der Formel HX-Z-XH (IV) umsetzt, wobei die Symbole $R_1$, $R_2$, X und Z die obigen Bedeutungen besitzen und in einem aprotischen polaren Lösungsmittel mit einem Molverhältnis der Verbindung mit der Amin- und Chlorfunktion zur Verbindung HX-Z-XH von 1,7:1 bis 2,3:1 gearbeitet wird.

2. Verfahren nach Anspruch 1, dadurch gekennzeichnet, daß die Amin- und Chlorfunktion tragende Verbindung der Formel

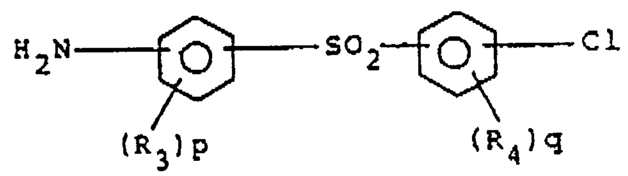

(V)

entspricht, in der $R_3$ und $R_4$, die gleich oder verschieden zwischen $R_3$, $R_4$ und ebenso zwischen $R_3$ und $R_4$ sein können und jeweils ein Halogenatom oder einen einwertigen Rest beseichen, der unter den einwertigen $C_1$- bis $C_8$-Kohlenwasserstoffgruppen und den monofunktionellen Gruppen ausgewählt wird, und die Symbole p und q für gleiche oder verschiedene ganze Zahlen stehen, die Werte zwischehn 0 und 4, insbesondere zwischen 0 und 2, annehmen.

3. Verfahren nach Anspruch 1 oder 2, dadurch gekennzeichnet, daß in der Formel der Verbindung HX-Z-XH, Z eine zweiwertige Gruppe darstellt, die unter den $C_1$- bis $C_{12}$-Alkylresten, den $C_5$- bis $C_{20}$-Cycloalkylresten, den einkernigen zweiwertigen alkylaromatischen $C_6$- bis $C_{20}$-Resten, den mehrkernigen zweiwertigen alkylaromatischen $C_{12}$- bis $C_{20}$-Resten mit aneinandergeketteten Ringen oder $C_{10}$- bis $C_{20}$-Resten mit kondensierten Ringen, den zweiwertigen aromatischen Resten der Formel -Ar-Y-Ar-, in der -Ar- für einen zweiwertigen $C_6$ bis $C_{10}$-Arylrest steht und -Y- -S-, -SO-, $-SO_2-$, -O-, -CO-, $-C_nH_{2n}-$ bedeutet, wobei n eine ganze Zahl von 1 bis 12 ist, und den Substituenten ausgewählt wird, die sich von dem einen oder anderen der vorgenannten Reste durch Ersetzen eines oder mehrerer ihrer Wasserstoffatome durch einen oder mehrere Substituenten ableiten, die unter den Halogenen und den monofunktionellen Gruppen ausgewählt sind.

4. Verfahren nach Anspruch 3, dadurch gekennzeichnet, daß Z einen der folgenden zweiwertigen Reste bedeutet:

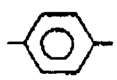 , 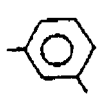 , 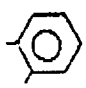 , 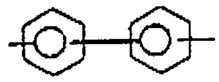 , 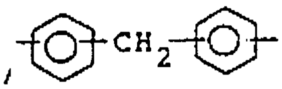 ,

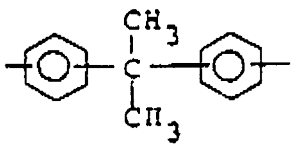 , 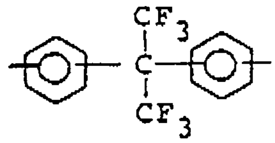 , 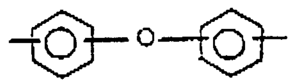 ,

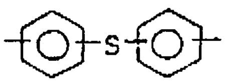 , 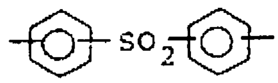 , 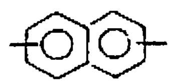 ,

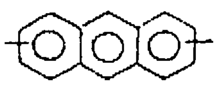 ,

$-C_nH_{2n}-$
wobei n eine ganze Zahl von 1 bis 12, vorzugsweise von 1 bis 8 bezeichnet.

**5.** Verfahren nach einem der Ansprüche 1 bis 4, dadurch gekennzeichnet, daß die Reaktion zwischen der Amin- und Chlorfunktion tragenden Verbindung und der Verbindung HX-Z-XH bei Rückflußtemperatur des aprotischen polaren Lösungsmittels durchgeführt wird.

**6.** Aromatische Diamine, die in ihren Kohlenstoffketten sowohl Sulfon- als auch Ether- oder Thioethergruppen tragen, dadurch gekennzeichnet, daß sie der allgemeinen Formel

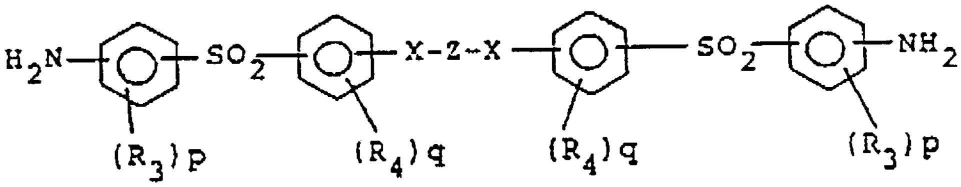 (II)

entsprechen, in der $R_3$ und $R_4$, die gleich oder verschieden zwischen $R_3$, $R_4$ und ebenso zwischen $R_3$ und $R_4$ sein können, jeweils ein Halogenatom oder einen einwertigen Rest bezeichen, der unter den einwertigen $C_1$- bis $C_8$-Kohlenwasserstoffgruppen und den monofunktionellen Gruppen ausgewählt wird, und die Symbole p und q für gleiche oder verschiedene ganze Zahlen stehen, die Werte zwischen 0 und 4 und insbesondere zwischen 0 und 2 annehmen, X, gleich oder verschieden, jeweils ein Sauerstoff- oder ein Schwefelatom bedeutet und Z ein zweiwertiger organischer $C_1$- bis $C_{20}$-Rest ist.

**7.** Diamine nach Anspruch 6, dadurch gekennzeichnet, daß in der sie definierenden Formel X ein Sauerstoffatom bedeutet und p und q beide gleich Null sind.

**8.** Diamine nach Anspruch 6 oder 7, dadurch gekennzeichnet, daß Z eine zweiwertige Gruppe darstellt, die unter den $C_1$- bis $C_{12}$-Alkylresten, den $C_5$- bis $C_{20}$-Cycloalkylresten, den einkernigen zweiwertigen alkylaromatischen $C_6$- bis $C_{20}$-Resten, den mehrkernigen zweiwertigen alkylaromatischen $C_{12}$- bis $C_{20}$-Resten mit aneinandergeketteten Ringen oder $C_{10}$- bis $C_{20}$-Resten mit kondensierten Ringen, den zweiwertigen aromatischen Resten der Formel -Ar-Y-Ar-, in der -Ar- für einen zweiwertigen $C_6$- bis $C_{10}$-Arylreststeht und -Y- S-, -SO-, $-SO_2-$, -O-, -CO-, $-C_nH_{2n}-$ bedeutet, wobei n eine ganze Zahl von 1 bis 12 ist, und den Substituenten ausgewählt wird, die sich von dem einen oder anderen der vorgenannten Reste durch Ersetzen eines oder mehrerer ihrer Wasserstoffatome durch einen oder mehrere Substituenten ableiten, die unter den Halogenen und den monofunktionellen Gruppen ausgewählt sind.

**9.** Diamine nach Anspruch 8, dadurch gekennzeichnet, daß Z einen der folgenden zweiwertigen Reste bedeutet:

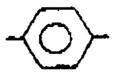, 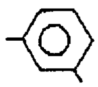, 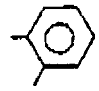, 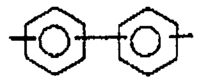, 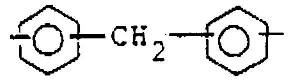,

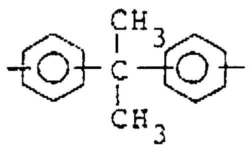, 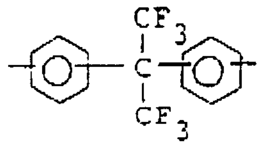, 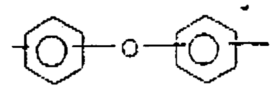,

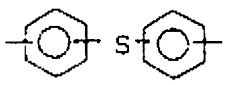, 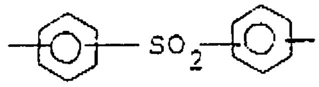, 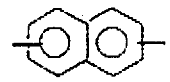,

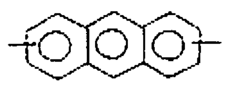,

$-C_nH_{2n}-$

wobei n eine ganze Zahl von 1 bis 12, vorzugsweise von 1 bis 8 bezeichnet.

**10.** Anwendung der Amine nach einem der Ansprüche 6 bis 9 als Härter in Rezepturen auf Epoxydbasis.

**11.** Anwendung nach Anspruch 10, dadurch gekennzeichnet, daß die Härterezepturen auf Epoxydbasis durch ein Fasermaterial und besonders durch ein Material aus langen Fasern verstärkt wird, wobei die Aushärtung dieser mit Verstärkermaterial versetzten Rezepturen zu Verbundmaterialien führt.

**12.** Anwendung nach Anspruch 10, dadurch gekennzeichnet, daß die Härterezepturen auf Epoxydbasis auf ein faseriges Verstärkungsmaterial und besonders auf ein aus langen Fasern aufgebautes Material aufgetragen werden, um ein Prepreg zu bilden, dessen Aushärtung zu einem Verbundwerkstoff führt.

**13.** Anwendung nach Anspruch 11 oder 12, dadurch gekennzeichnet, daß die das Verstärkungsmaterial bildenden Fasern unter den Glasfasern, den keramischen Fasern, den aromatischen Polyamidfasern, den Kohlenwasserstoff- oder Graphitfasern, den gemischten Fasern auf Basis von mindestens zweien dieser Materialien, und den Mischungen von solchen Fasern ausgewählt werden.